(19) Europäisches Patentamt
European Patent Office
Office européen des brevets

(11) Veröffentlichungsnummer: **0 381 866 A2**

(12) # EUROPÄISCHE PATENTANMELDUNG

(21) Anmeldenummer: **89124165.5**

(22) Anmeldetag: **30.12.89**

(51) Int. Cl.5: **C08L 81/02, //(C08L81/02, 71:02)**

(30) Priorität: **13.01.89 DE 3900914**

(43) Veröffentlichungstag der Anmeldung: **16.08.90 Patentblatt 90/33**

(84) Benannte Vertragsstaaten: **BE DE FR GB IT**

(71) Anmelder: **BAYER AG**
**D-5090 Leverkusen 1 Bayerwerk(DE)**

(72) Erfinder: **Heinz, Hans-Detlef, Dr.**
**Breslauer Strasse 31**
**D-4150 Krefeld(DE)**
Erfinder: **Schmitt, Walter, Dr.**
**Am Konebusch 5a**
**D-4040 Neuss 21(DE)**
Erfinder: **Reinking, Klaus, Dr.**
**Robert-Stolz-Strasse 16b**
**D-5632 Wermelskirchen(DE)**
Erfinder: **Meyer, Rolf-Volker, Dr.**
**Buchheimer Strasse 23**
**D-4150 Krefeld(DE)**
Erfinder: **Köhler, Burkhard, Dr.**
**Virneburgstrasse 9**
**D-4150 Krefeld 11(DE)**

(54) **Arylensulfidpolymere mit verbesserter Verarbeitbarkeit.**

(57) Die Erfindung betrifft modifizierte Arylensulfidpolymer-Formmassen, hergestellt durch Zusammenschmelzen von Arylensulfidpolymeren und speziellen Polyethylenoxiden sowie gegebenenfalls weiteren Zusatzstoffen.

EP 0 381 866 A2

Xerox Copy Centre

# Arylensulfidpolymere mit verbesserter Verarbeitbarkeit

Die Erfindung betrifft modifizierte Arylensulfidpolymer-Formmassen, hergestellt durch Zusammenschmelzen von Arylensulfidpolymeren und speziellen Polyethylenoxiden sowie gegebenenfalls weiteren Zusatzstoffen.

Arylensulfidpolymere (PAS) sind als inerte, hochtemperaturbeständige Thermoplaste, die zudem einen hohen Füllgrad mit Glasfasern und/oder anderen Materialien erlauben, bekannt. Sie werden z.B. in der Elektroindustrie verwendet.

Die Verwendung dieser Polymeren, insbesondere des Polyparaphenylensulfids (PPS), nimmt vor allem in Bereichen, die bislang Duroplasten vorbehalten waren, wegen der einfacheren Verarbeitbarkeit zu.

Spritzgußfähige PAS-Formmassen, die Glasfasern und/oder mineralische Füllstoffe in hohen Konzentrationen enthalten können, zeichnen sich im allgemeinen durch vergleichsweise niedrige Viskositäten der Schmelzen aus.

Sie können im allgemeinen gut im Spritzguß verarbeitet werden.

Bei der Herstellung dünnwandiger Formteile können jedoch Schwierigkeiten auftreten, wenn die Fließwege der Schmelzen im Werkzeug sehr lang sind. Dies ist vorzugsweise dann der Fall, wenn aus Gründen der Verzugsfreiheit die Anschnitte so gelegt sind, daß eine Vorzugsorientierung z.B. der Glasfasern resultiert.

Bei der Herstellung derartiger Formteile kann es schwierig sein, die Formen trotz der niedrigen Viskositäten der Schmelzen vollständig zu füllen. Ein Grund kann sein, daß PAS-Schmelzen beim Abkühlen außerordentlich rasch erstarren Dies folgt aus der hohen Kristallisationstemperatur von PAS. Die Kristallisationstemperatur von z.B. PPS liegt üblicherweise im Bereich von 230-250 °C (bestimmt durch DSC-Messung).

So kann bei langen Fließwegen der Schmelzen im Formteil die Schmelze bereits während des Formfüllvorgangs soweit abgekühlt werden, daß eine Erstarrung einsetzt. Die Folge ist, daß die vollständige Füllung der Form erschwert oder unmöglich wird. Allgemein weisen Formteile, bei denen der Erstarrungsprozeß schon während des Formfüllvorgangs einsetzt, verringerte mechanische Festigkeit auf. Bei verstärkten oder gefüllten Formassen treten zudem Oberflächenstörungen in Angußferne auf.

Im Sinne der Verarbeitbarkeit von gegebenenfalls faserverstärkten oder mineralgefüllten Polyarylensulfidmassen wäre es daher von Vorteil, die Kristallisationsgeschwindigkeit deutlich zu senken. Vorteilhafterweise sollte der hohe Kristallisationsgrad der Polyarylensulfide nicht negativ beeinflußt werden.

Die Möglichkeit, durch Copolymerisation die Kristallisationsgeschwindigkeit der PAS zu verringern, wird durch die Tatsache sehr begrenzt, daß im allgemeinem die Synthese dann nicht mehr befriedigend verläuft bzw. nur Produkte mit unzureichendem Molekulargewicht entstehen.

Es wurde nun gefunden, daß Mischungen aus Arylensulfidpolymeren, vorzugsweise Polyphenylensulfiden, und speziellen Polyethylenoxiden eine deutlich verringerte Kristallisationsgeschwindigkeit aufweisen. Die hohe Kristallinität der PAS ist dabei praktisch nicht verringert. Die Schmelzpunkte der PAS werden nicht gesenkt. Die deutliche Absenkung der Kristallisationsgeschwindigkeit wird schon durch Zugabe sehr geringer Mengen der Polyethylenoxide erreicht.

Aus der Japanischen Patentanmeldung 58 217 553 ist die Verwendung spezieller Ether bzw. Polyether als Additive für PPS bekannt. Die verwendeten Additive weisen allerdings Nachteile auf, nämlich im allgemeinen nicht ausreichende thermische Stabilität bzw zu große Flüchtigkeit.

Auch sind die dort vorgeschlagenen Additve im allgemeinen weniger zur Absenkung der Kristallisationsgeschwindigkeit geeignet.

Gegenstand der Erfindung sind daher Arylensulfidpolymer-Formmassen, hergestellt durch Zusammenschmelzen von

A) 90,0 bis 99,9 Gew-%, vorzugsweise 92,0 bis 99,8 Gew.-%, besonders bevorzugt 95,0 bis 99,5 Gew.-% Arylensulfidpolymerer, vorzugsweise Polyphenylensulfid, und

B) 0,1 bis 10 Gew.-%, bevorzugt 0,2 bis 8 Gew.-%, besonders bevorzugt 0,5 bis 5 Gew.% spezieller Polyethylenoxide der allgemeinen Formeln (I) und/oder (II)

$$R \left[ -(CH_2CH_2O)_u \; (CH_2\underset{\displaystyle CH_3}{\underset{|}{C}}H-O)_v-R^I \right]_w \qquad (I)$$

$$R^{II} \left[ -(CH_2CH_2O)_x \; (-CH_2\underset{\displaystyle CH_3}{\underset{|}{C}}H-O-)_y- \; R^{III} \right]_z \qquad (II)$$

wobei

R einen organischen Rest mit mindestens 10, bevorzugt mindestens 15 und besonders bevorzugt mindestens 20 C-Atomen, der zu einem untergeordneten Teil auch Sauerstoff und/oder Stickstoff-Atome enthalten kann, wobei bevorzugt mindestens ein aromatischer Ring enthalten ist und in dem die Bindung an die Ether-Blöcke über Sauerstoff und gegebenenfalls teilweise auch über Stickstoff-Atome, bevorzugt als eine aromatisch-aliphatische Ether-Gruppe, erfolgt,

$R^I$ Wasserstoff oder einen Acylrest

$$-\overset{O}{\overset{\|}{C}}-R^{IV},$$

$R^{II}$ den Rest eines ein- oder mehrwertigen (Amino) alkohols und/oder Hydroxycarbonsäure und/oder (Poly)-carbonsäure,

$R^{III}$ Wasserstoff oder den Rest einer Carbonsäure, bevorzugt einen langkettigen Fettsäurerest,

$R^{IV}$ einen Alkyl- oder Aryl-Rest mit 1-25 Kohlenstoff-Atomen,

u,v,x,y ganze Zahlen von 0 - ungefähr 100, bevorzugt 0-60, wobei die Summe von u und v bzw. x und y mindestens 4, bevorzugt mindestens 6, beträgt und wobei $u \geqq v$ und $x \geqq y$ gilt,

w,z ganze Zahlen von 1-7, bevorzugt 1-4 bedeuten, mit der Maßgabe, daß in der Formel (II) entweder $R^{II}$ oder $R^{III}$ mindestens 10 C-Atome aufweisen, sowie

C) gegebenenfalls 0,001 bis ungefähr 300 Gew.-%, bezogen auf die Summe der Gewichte der Komponenten A + B, weiterer Zusatzstoffe.

Die Verbindungen der Formeln (I) und (II) sind prinzipiell bekannt oder können nach prinzipiell bekannten Verfahren hergestellt werden.

Beispiele für Verbindungen der Formel (I) sind:

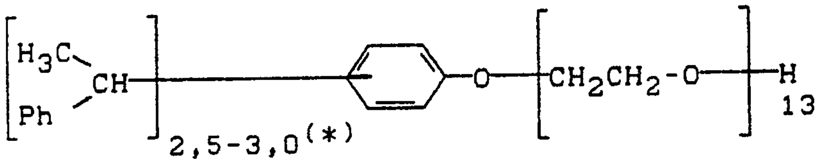

1

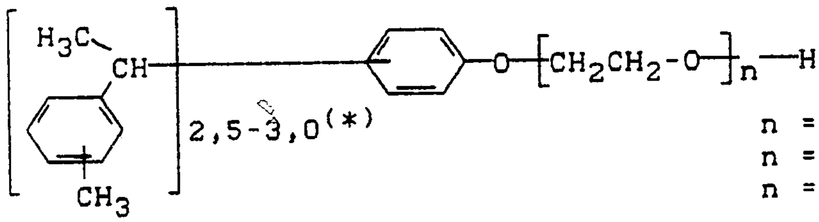

n = 17 2

n = 27 3

n = 50 4

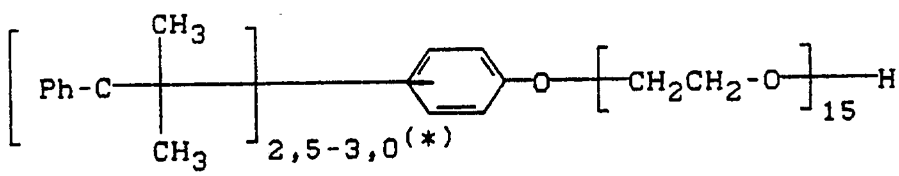

5

(*) Die ungeraden Zahlen bedeuten, daß es sich um Gemische von unterschiedlich alkylierten Verbindungen handelt.

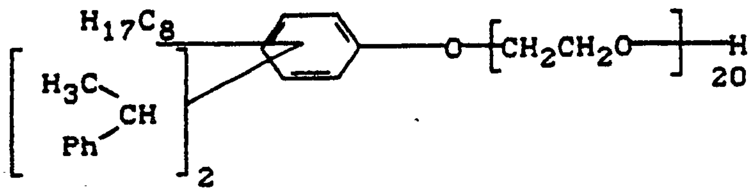

6

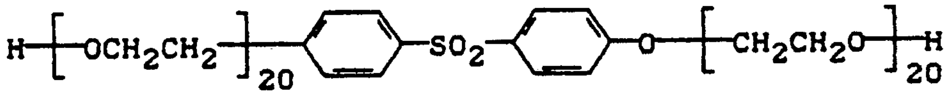

7

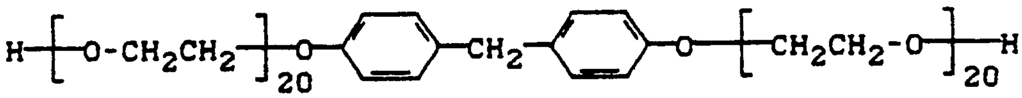

8

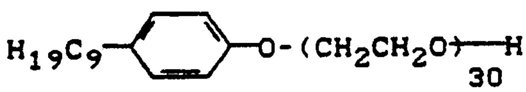

9

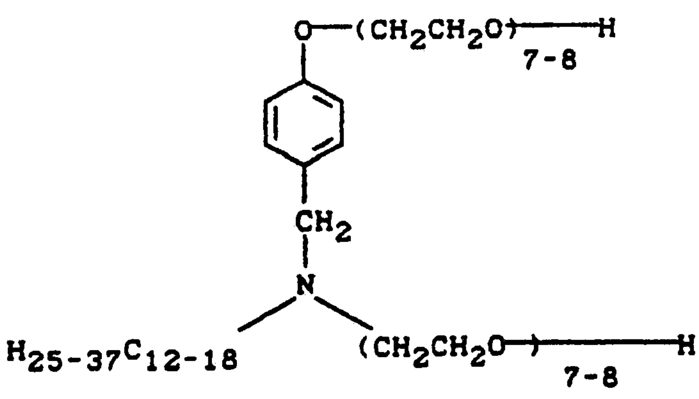

10

Ein Beispiel für eine Verbindung der allgemeinen Formel (II) ist

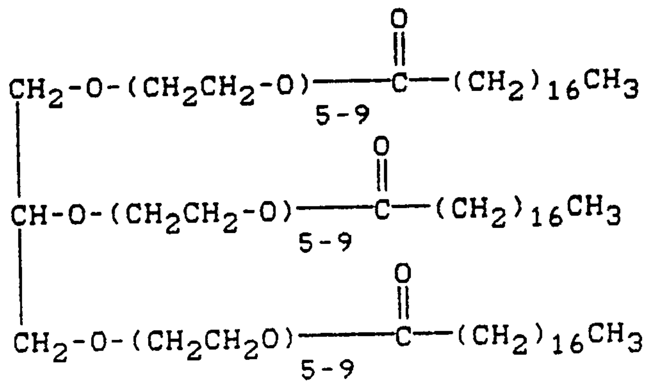

11

Der überraschende Befund war gewesen, daß aus dem großen Gebiet der Polyether, speziell Polyethylen-, Polypropylen- und Polybutylenoxiden, im allgemeinen nur Polyethylenoxide (bzw. Copolyether aus Ethylenoxid und ≦ ungefähr 50 Mol% Propylenoxid; diese werden ebenfalls als unter dem Begriff "Polyethylenoxide" enthalten betrachtet) als Kristallisationsverzögerer wirksam sind, wobei sich meist die Anwesenheit eines großen hydrophoben Restes als günstig erwiesen hat.

Bevorzugte Polyethylenoxide gemäß der Formeln (I) und (II) sind daher Homopolyethylenoxide mit einer Länge des Etherrestes von mindestens 4-5 bis ungefähr 60 Einheiten, welche mindestens einen hydrophoben Rest von mindestens 10, bevorzugt mindestens 15 und besonders bevorzugt mindestens 20 Kohlenstoff-Atomen enthalten.

Die Verbindungen 1 - 11 sind typische Beispiele für bevorzugte Polyether im Sinne der Erfindung.

Die thermische Stabilität der bevorzugten Polyethylenoxide in den modifizierten Arylensulfidpolymer-Formmassen ist ausgezeichnet.

Erfindungsgemäß einsetzbare Polyarylensulfide sind bekannt, z.B. EP-A 0 171 021.

Die erfindunsgemäß einzusetzenden Polyethylenoxide werden den Arylensulfidpolymeren zu 0,1 - 10, bevorzugt 0,2 - 8 und besonders bevorzugt 0,5 - 5,0 Gew.-% zugemischt.

Die Herstellung der erfindungsgemäßen Formmassen erfolgt in der Schmelze, wobei Temperaturen von 290 °C-370 °C bevorzugt werden. Alle in der Thermoplast-Verarbeitung zur Abmischung üblichen Verfahren, z.B. Kneten oder Extrudieren, sind zur Herstellung der erfindungsgemäßen Formmassen geeignet.

Die erfindungsgemäßen Arylensulfidpolymer-Formmassen können, je nach Additiv, von 0,001 bis ungefähr 300 Gew.-%. weiterer Zusatzstoffe wie beispielsweise Verstärkungsmaterialien (z.B. Glasfasern oder mineralische Füllstoffe), Weichmacher, Fließhilfsmittel, UV-Stabilisatoren, Antioxidantien, Pigmente und andere Zusätze enthalten, allein oder im Gemisch.

Die erfindungsgemäßen Arylensulfidpolymer-Formmassen weisen bei heller Eigenfarbe eine deutlich verringerte Kristallisationsgeschwindigkeit auf. Zusätzlich kann auch die Schmelzviskosität verringert sowie die Oberflächenqualität von Formteilen deutlich verbessert sein. Weiterhin können sie ein verbessertes Entformungsverhalten aufweisen. Sie eignen sich zur Herstellung von Formkörpern, Folien, Fasern und anderen Gegenständen nach z.B. den Verfahren des Spritzgießens und der Extrusion.

## Beispiele

Als Maß für die Kristallisationsgeschwindigkeit wurde das Maximum der Kristallisations-Exothermen beim Abkühlen aus der Schmelze (dynamische Kristallisation) gewählt (Kühlrate: 20 ($min^{-1}$).

Die Schmelzviskositätsmessungen wurden mit einem Contraves RM 30 Platte-Kegel-Viskosimeter, die DSC-Messungen mit einem Perkin-Elmer DSC-System 7-Gerät durchgeführt.

Sofern nicht anders angegeben, beziehen sich die Prozentangaben auf das Gewicht (der fertigen Mischung).

## Beispiele 1 bis 3

In Rundkolben wurden unter $N_2$ Mischungen aus je ca. 30 g PPS-Granulat mit einer Schmelzviskosität von 36 Pas bei 320 °C und einem Schergefälle von 10 $s^{-1}$ und 1,2 und 5 Gew.-%. eines ethoxylierten, mit Vinyltoluol styrolisisierten Phenols der idealisierten Formel 2 auf 320 °C erhitzt und unter Rühren homogenisiert. Insgesamt wurde nach dem Aufschmelzen des Polymeren 30 Min. lang gerührt. Anschließend wurden die Mischungen auf Raumtemperatur abgekühlt und die Proben gehäckselt.

Die Ergebnisse der DSC-Untersuchungen sowie der Schmelzviskositätsbestimmung sind in Tabelle 1 angegeben.

Vergleichsbeispiel 1

In der für die Beispiele 1-3 angegebenen Weise wurde das reine PPS-Granulat aufgeschmolzen, 30 min lang gerührt, abkühlen lassen und nach Erstarren der Mischung gehäckselt. Die Ergebnisse der DSC-Untersuchung sowie der Schmelzviskositätsbestimmung sind in Tabelle 1 angegeben.

Beispiele 4 bis 9

In der für die Beispiele 1-3 angegebenen Weise wurde PPS mit je 1,2 und 5 Gew.-% zweier ethoxylierter, mit Vinyltoluol styrolisierter Phenole unterschiedlicher Polyetherkettenlänge (Verbindungen Nr. 3 und 4) modifiziert.

Die Ergebnisse der DSC-Untersuchungen sowie der Schmelzviskositätsbestimmungen sind in Tabelle 1 angegeben.

Tabelle 1

| Beispiel | Additiv | $T_s$ [°C] | $\Delta H_s$ [j/g] | $T_K$ [°C] | $\Delta H_K$ [j/g] | SV[1] [Pas] |
|---|---|---|---|---|---|---|
| 1 | 1 % 2 | 281,3 | 44,7 | 205,4 | 46,6 | 25 |
| 2 | 2 % 2 | 280,2 | 44,2 | 202,4 | 45,5 | 31 |
| 3 | 5 % 2 | 280,2 | 45,3 | 203,1 | 46,8 | 16 |
| 4 | 1 % 3 | 281,6 | 44,8 | 208,7 | 47,0 | 31 |
| 5 | 2 % 3 | 282,0 | 44,5 | 203,5 | 46,2 | 29 |
| 6 | 5 % 3 | 281,5 | 45,2 | 203,5 | 45,1 | 24 |
| 7 | 1 % 4 | 280,1 | 47,2 | 212,9 | 47,1 | 31 |
| 8 | 2 % 4 | 280,0 | 43,9 | 204,6 | 45,6 | 23 |
| 9 | 5 % 4 | 281,4 | 44,6 | 203,4 | 45,8 | - |
| Vgl. 1 | - - | 281,8 | 51,5 | 231,9 | 49,7 | 36 |

1) Bei 320 °C und 10 $s^{-1}$.

Vergleichsbeispiele 2-4

In der für die Beispiele 1-3 beschriebenen Weise wurde PPS mit je 1 Gew.-% Polyethylenglykol ( $\overline{M} \approx$ 400), Polypropylenoxid (trifunktionell, $\overline{M}n \approx 5500$, aminiert) und Polytetramethylenglykol ( $\overline{M}n \approx 1000$) modifiziert.

Die Daten der DSC-Untersuchungen sind in Tabelle 2 enthalten.

Vergleichsbeispiele 5 + 6

In der für die Beispiele 1-3 angegebenen Weise wurde PPS mit 1 und 2 Gew.-% eines beidseitig monoethoxylierten Bisphenol A modifiziert.

Die Ergebnisse der DSC-Untersuchungen sind in Tabelle 2 angegeben.

Tabelle 2

| Beispiel | Additiv | $T_s$ [° C] | $\Delta H_s$ [j/g] | $T_K$ [° C] | $\Delta H_K$ [j/g] |
|---|---|---|---|---|---|
| Vgl. 2 | 1 % PEG 400 | 280,1 | 46,0 | 221,9 | 46,6 |
| Vgl. 3 | 1 % PPO 5500¹) | 279,5 | 47,5 | 228,2 | 47,5 |
| Vgl. 4 | 1 % PTHF 1000²) | 280,7 | 48,7 | 232,4 | 48,6 |
| PPS | - - | 280,8 | 49,6 | 233,4 | 48,4 |
| Vgl. 5 | 1 % BPA-2EO | 279,2 | 44,4 | 227,7 | 44,3 |
| Vgl. 6 | 2 % BPA-2EO | 280,6 | 46,3 | 227,7 | 47,0 |
| PPS | - - | 281,8 | 51,5 | 231,9 | 49,7 |

¹) Amin-Endgruppen
²) Polytetrahydrofuran

Beispiele 10-12

In der für die Beispiele 1-3 angegebenen Weise wurde PPS mit je 5 Gew.-% der Verbindungen 9, 10 und 11 modifiziert.

Die Ergebnisse der DSC-Untersuchungen sowie der Schmelzviskositätsbestimmungen sind in Tabelle 3 enthalten.

Tabelle 3

| Beispiel | Additiv | $T_s$ [° C] | $\Delta H_s$ [I/g] | $T_K$ [° C] | $\Delta H_K$ [J/g] | SV¹) [Pas] |
|---|---|---|---|---|---|---|
| 10 | 5 % 9 | 280,9 | 43,4 | 207,4 | 46,5 | 25 |
| PPS | - - | 281,8 | 51,5 | 231,9 | 49,7 | 36 |
| 11 | 5 % 10 | 279,9 | 40,6 | 206,1 | 42,9 | 16 |
| 12 | 5 % 11 | 279,2 | 40,8 | 205,0 | 43,2 | 23 |
| PPS | - - | 280,2 | 47,3 | 233,0 | 48,0 | 38 |

¹) Bei 320° C und 10 $s^{-1}$

Wie die Beispiele zeigen, sind die erfindungsgemäß einzusetzenden Polyethylenoxide wirksame Kristallisationsverzögerer, während Polypropylen- bzw. Polybutylenoxide bzw. Verbindungen mit zu kurzer Ether-Kette (Vgl. 5+6) kaum wirksam sind.

Die erfindungsgemäßen Formmassen weisen im allgemeinen eine hohe thermische Stabilität auf (s. Tabelle 4).

Tabelle 4

| Beispiel | Additiv | Gewichtsverlust in % bei T in [° C]¹) | | | | | | |
|---|---|---|---|---|---|---|---|---|
| | | 150 | 200 | 250 | 300 | 350 | 400 | 450 |
| 1 | 1 % 2 | <0,1 | <0,1 | <0,1 | 0,1 | 0,2 | 0,35 | 0,9 |
| 2 | 2 % 2 | <0,1 | <0,1 | <0,1 | 0,1 | 0,25 | 0,6 | 1,4 |
| Vgl. 1 | - - | <0,1 | <0,1 | <0,1 | 0,1 | 0,15 | 0,25 | 0,45 |

¹) Heizrate: 20 K $min^{-1}$

## Ansprüche

1. Arylensulfidpolymer-Formmassen, hergestellt durch Zusammenschmelzen von

A) 90,0 bis 99,9 Gew.-%, vorzugsweise 92,0 bis 99,8 Gew.-%, besonders bevorzugt 95,0 bis 99,5 Gew.-%. Arylensulfidpolymerer, vorzugsweise Polyphenylensulfid, und

B) 0,1 bis 10 Gew.-%, bevorzugt 0,2 bis 8 Gew.-%, besonders bevorzugt 0,5 bis 5 Gew.-%, spezieller Polyethylenoxide der allgemeinen Formeln (I) und/oder (II)

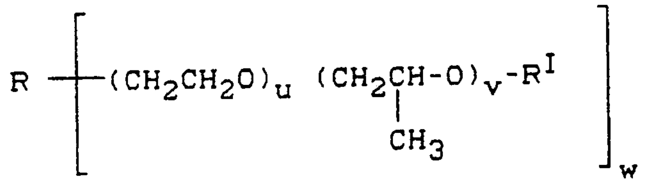

(I)

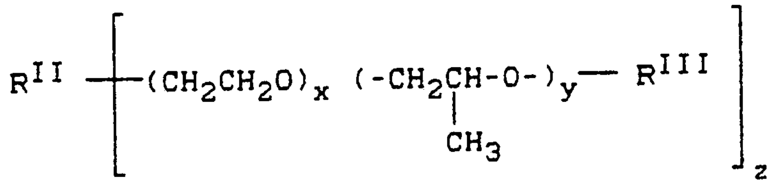

(II)

wobei

R einen organischen Rest mit mindestens 10, bevorzugt mindestens 15 und besonders bevorzugt mindestens 20 C-Atomen, der zu einem untergeordneten Teil auch Sauerstoff und/oder Stickstoff-Atome enthalten kann, wobei bevorzugt mindestens ein aromatischer Ring enthalten ist, und in dem die Bindung an die Ether-Blöcke über Sauerstoff und gegebenenfalls teilweise auch über Stickstoff-Atome, bevorzugt als eine aromatisch-aliphatische Ether-Gruppe, erfolgt,

$R^I$ Wasserstoff oder einen Acylrest

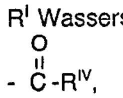,

$R^{II}$ den Rest eines ein- oder mehrwertigen (Amino) alkohols und/oder Hydroxycarbonsäure und/oder (Poly)-carbonsäure,

$R^{III}$ Wasserstoff oder den Rest einer Carbonsäure, bevorzugt einen langkettigen Fettsäurerest,

$R^{IV}$ einen Alkyl- oder Aryl-Rest mit 1-25 Kohlenstoff-Atomen,

u,v,x,y ganze Zahlen von 0 - ungefähr 100, bevorzugt 0-60, wobei die Summe von u und v bzw. x und y mindestens 4, bevorzugt mindestens 6 beträgt und wobei $u \geqq v$ und $x \geqq y$ gilt,

w,z ganze Zahlen von 1-7, bevorzugt 1-4, bedeuten,

mit der Maßgabe, daß in der Formel (II) entweder $R^{II}$ oder $R^{III}$ mindestens 10 C-Atome aufweisen, sowie

C) gegebenenfalls 0,001 bis ungefähr 300 Gew.-%, bezogen auf die Summe der Gewichte der Komponenten A + B, weiterer Zusatzstoffe.

2. Polyarylensulfid-Formmassen nach Anspruch 1, dadurch gekennzeichnet, daß als Komponente B bevorzugt u.a. die Verbindungen 1 - 11 eingesetzt werden.

3. Polyarylensulfid-Formmassen nach Anspruch 1, dadurch gekennzeichnet, daß als Komponente C, allein oder im Gemisch, Verstärkungsmaterialien (z.B. Glasfasern oder mineralische Füllstoffe), Weichmacher, Fließhilfsmittel, UV-Stabilisatoren, Antioxidantien, Pigmente und andere Zusätze eingesetzt werden.

4. Verwendung von Mischungen nach Anspruch 1 zur Herstellung von Formkörpern, Folien , Fasern und anderen Gegenständen.